(19) Europäisches Patentamt / European Patent Office / Office européen des brevets

(11) **EP 4 542 596 A2**

(12) **EUROPEAN PATENT APPLICATION**

(43) Date of publication:
**23.04.2025 Bulletin 2025/17**

(21) Application number: **24191775.6**

(22) Date of filing: **30.07.2024**

(51) International Patent Classification (IPC):
**H01G 4/008** (2006.01)    **H01G 4/012** (2006.01)
**H01G 4/12** (2006.01)    **H01G 4/30** (2006.01)

(52) Cooperative Patent Classification (CPC):
**H01G 4/30; H01G 4/0085; H01G 4/012;
H01G 4/1209; H01G 4/1227; H01G 4/1245**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.10.2023 KR 20230137511**

(71) Applicant: **Samsung Electro-Mechanics Co., Ltd.
Suwon-si, Gyeonggi-do 16674 (KR)**

(72) Inventors:
• **Oh, Yuhong
  Suwon-si, Gyeonggi-do 16674 (KR)**

• **Choi, Wonmi
  Suwon-si, Gyeonggi-do 16674 (KR)**
• **Shin, Sumin
  Suwon-si, Gyeonggi-do 16674 (KR)**
• **Lee, Sunghwan
  Suwon-si, Gyeonggi-do 16674 (KR)**
• **Kim, Byungkun
  Suwon-si, Gyeonggi-do 16674 (KR)**
• **Ahn, Jihye
  Suwon-si, Gyeonggi-do 16674 (KR)**
• **Kim, Dojeon
  Suwon-si, Gyeonggi-do 16674 (KR)**

(74) Representative: **Grünecker Patent- und
Rechtsanwälte
PartG mbB
Leopoldstraße 4
80802 München (DE)**

(54) **MULTILAYERED CEREAMIC CAPACITOR THE INTERNAL ELECTRODES COMPRISING NICKEL AND GERMANIUM**

(57) >A multilayered capacitor (100) comprising:
a capacitor body (110) that includes a dielectric layer (111) and an internal electrode (121, 122); and
an external electrode (131, 132) that is disposed on an outside of the capacitor body (110),
wherein the internal electrode (121, 122) includes a Ni-Ge alloy (nickel-germanium alloy), and
when an average content (wt%) of Ge (germanium) relative to Ni (nickel) at a center portion of the internal electrode (121, 122) is denoted by X and the average content (wt%) of Ge (Germanium) relative to Ni (nickel) at points spaced 20 nm apart from an interface between the internal electrode (121, 122) and the dielectric layer (111) toward the center portion of the internal electrode (121, 122) is denoted by Y, a relationship between X and Y satisfies: $(|X-Y|/X) \leq 0.2$.
<

FIG. 1

EP 4 542 596 A2

**(Cont. next page)**

# FIG. 2

**Description**

**BACKGROUND**

**(a) Technical Field**

The present disclosure relates to a multilayered capacitor.

**(b) Description of the Related Art**

Recently, as multi-fictionalization and miniaturization of electronic devices have been rapidly progressing, miniaturization and performance improvement of electronic components have also been progressing at a rapid pace. Further, the demand for high reliability of electric devices for use in automobiles, network equipment, or the like and electronic components for use in industries has also been increasing significantly.

In order to meet such market demands, competition for technology development of passive components such as inductors, capacitors, or resistors has been accelerating. In particular, great effort has been required to dominate the market by developing various multilayer ceramic capacitor (MLCC) products whose applications and usage as passive components have been continuously increasing.

Further, MLCCs are capacitors made by stacking dielectric layers and internal electrodes, and are used in various electronic devices such as mobile phones, laptops, LCD TVs, etc.

With the recent advancement of technology, MLCCs require miniaturization and higher capacity, which entails reducing the thicknesses of internal electrodes and dielectric layers. As the thicknesses of dielectric layers decrease, the field intensity which is applied to each layer becomes relatively stronger. Accordingly, there is a problem that the reliability of capacitors decreases and capacitance also decreases due to deterioration of electrode connectivity.

**SUMMARY**

The present disclosure attempts to provide a multilayered capacitor with improved reliability and high capacity by improving the smoothness and connectivity of internal electrodes.

However, the effects of the embodiments are not limited to the above-described object, and they can be variously expanded without departing from the technical spirit and scope of the embodiments.

A multilayered capacitor according to an embodiment includes a capacitor body that includes a dielectric layer and an internal electrode, and an external electrode that is disposed on an outside of the capacitor body, and the internal electrode includes a Ni-Ge alloy, and when an average content (wt%) of Ge relative to Ni at a center portion of the internal electrode is denoted by X and the average content (wt%) of Ge relative to Ni at points spaced 20 nm apart from an interface between the internal electrode and the dielectric layer toward the center portion of the internal electrodes is denoted by Y, a relationship between X and Y satisfies Expression 1:

$$[\text{Expression 1}]$$

$$\frac{|X-Y|}{X} \leq 0.2.$$

The average content (wt%) of Ge relative to Ni in the internal electrode may be in a range of from 0.1 wt% to 10 wt%.

A value of X may be in a range of from 0.90 wt% to 1.80 wt%.

A value of Y may be in a range if from 1.00 wt% to 1.50 wt%.

An average thickness of the internal electrode may be in a range of from 0.05 $\mu$m to 1 $\mu$m.

An average thickness of the dielectric layer may be in a range from 0.05 $\mu$m to 2.5 $\mu$m.

The dielectric layer may include a dielectric including a major component and a minor component.

The major component may include $Ba_mTiO_3$, where $0.995 \leq m \leq 1.10$, $(Ba_{1-X}Ca_x)_m(Ti_{1-y}Zr_y)O_3$, where $0.995 \leq m \leq 1.10$, $0 \leq x \leq 0.10$, and $0 < y \leq 0.20$, $Ba_m(Ti_{1-x}Zr_x)O_3$, where $0.995 \leq m \leq 1.10$ and $x \leq 0.10$, $(Ba_{1-X}Ca_x)_m(Ti_{1-y}Sn_y)O_3$, where $0.995 \leq m \leq 1.10$, $0 \leq x \leq 0.10$ and $0 < y \leq 0.20$, or a combination thereof.

The minor component may include dysprosium (Dy), vanadium (V), manganese (Mn), chromium (Cr), silicon (Si), aluminum (Al), magnesium (Mg), tin (Sn), antimony (Sb), germanium (Ge), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

A multilayered capacitor according to another embodiment includes a capacitor body that includes a dielectric layer and an internal electrode, and an external electrode that is disposed on an outside of the capacitor body, and the internal electrode includes a Ni-Ge alloy, and an average content (wt%) of Ge relative to Ni in the internal electrode is not more than 10 wt%, and when the average content (wt%) of Ge relative to Ni at a center portion of the internal electrode is denoted by X and the average content (wt%) of Ge relative to Ni at points spaced 20 nm apart away from an interface between the internal electrode and the dielectric layer toward the center portion of the internal electrode is denoted by Y, a relationship between X and Y satisfies Expression 1 :

[Expression 1]

$$\frac{|X-Y|}{X} \leq 0.2$$

.

A value of X may be in a range of from 0.90 wt% to 1.80 wt%.

A value of Y may be in a range of from 1.00 wt% to 1.50 wt%.

An average thickness of the internal electrode may be in a range of from 0.05 $\mu$m to 1 $\mu$m.

An average thickness of the dielectric layer may be in a range of from 0.05 $\mu$m to 2.5 $\mu$m.

The dielectric layer may include a dielectric including a major component and a minor component.

The major component may include $Ba_m TiO_3$, where $0.995 \leq m \leq 1.10$, $(Ba_{1-x}Ca_x)_m(Ti_{1-y}Zr_y)O_3$, where $0.995 \leq m \leq 1.10$, $0 \leq x \leq 0.10$, and $0 < y \leq 0.20$, $Ba_m(Ti_{1-x}Zr_x)O_3$, where $0.995 \leq m \leq 1.10$ and $x \leq 0.10$, $(Ba_{1-x}Ca_x)_m(Ti_{1-y}Sn_y)O_3$, where $0.995 \leq m \leq 1.10$, $0 \leq x \leq 0.10$ and $0 < y \leq 0.20$, or a combination thereof.

The minor component may include dysprosium (Dy), vanadium (V), manganese (Mn), chromium (Cr), silicon (Si), aluminum (Al), magnesium (Mg), tin (Sn), antimony (Sb), germanium (Ge), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

According to a multilayered capacitor, it is possible to provide a multilayered capacitor with improved reliability and high capacity by improving the smoothness and connectivity of internal electrodes.

However, various advantages and various and advantageous effects of the present disclosure are not limited to those described above, and may be more readily understood in the course of describing specific embodiments of the present disclosure.

## BRIEF DESCRIPTION OF THE DRAWINGS

FIG. 1 is a perspective view illustrating a multilayered capacitor according to an embodiment.

FIG. 2 is a cross-sectional view of the multilayered capacitor taken along line I-I' in FIG. 1.

FIG. 3 is an exploded perspective view illustrating the stacking structure of internal electrodes layers in a capacitor body of FIG. 1.

FIG. 4 is a TEM image showing the result of component analysis on internal electrodes which are included in the multilayered capacitor according to an embodiment.

FIG. 5 shows EDS mapping of Ni.

FIG. 6 shows EDS mapping of Ge.

## DETAILED DESCRIPTION

Hereinafter, embodiments of the present disclosure will be described in detail with reference to the accompanying drawings such that those skilled in the art can easily implement them. The drawings and description are to be regarded as illustrative in nature and not restrictive. Like reference numerals designate like elements throughout the specification. Further, the accompanying drawings are provided for helping to easily understand embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinary number, such as first and second, are used for describing various constituent elements, but the constituent elements are not limited by the terms. The terms are used only to discriminate one constituent element from another constituent element.

When a constituent element is referred to as being "connected" or "coupled" to another constituent element, it will be appreciated that it may be directly connected or coupled to the other constituent element, or face each other, or intervening other constituent elements may be present. In contrast, when a constituent element is referred to as being "directly connected" or "directly coupled" to another constituent element, it will be appreciated that there are no intervening other constituent elements present.

In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance. Accordingly, unless explicitly described to the contrary, the word "comprise", and variations such as "comprises" or "comprising", will be understood to imply the inclusion of stated elements but not the exclusion of any other elements.

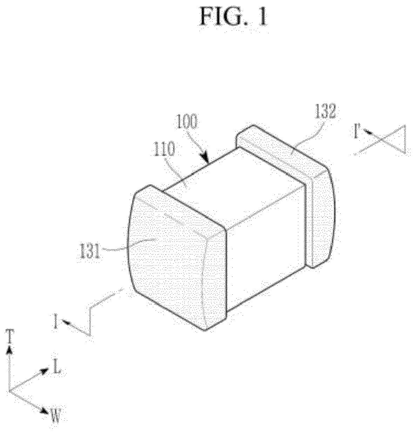

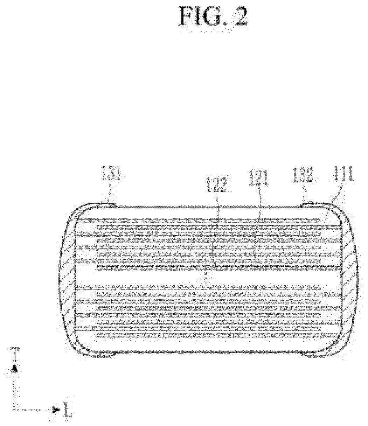

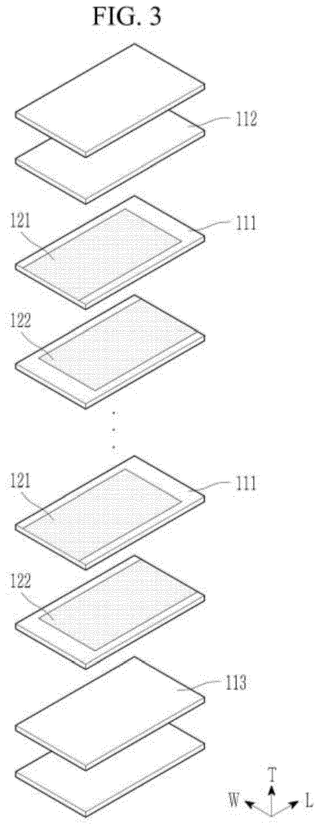

FIG. 1 is a perspective view illustrating a multilayered capacitor 100 according to an embodiment, and FIG. 2 is a cross-sectional view of the multilayered capacitor 100 taken along line I-I' in FIG. 1, and FIG. 3 is an exploded perspective view illustrating the stacking structure of internal electrodes in a capacitor body 110 of FIG. 1.

To clearly describe the present embodiment, directions are defined as follow: the L axis, the W axis, and the T axis shown in the drawings represent the longitudinal direction, width direction, and thickness direction of the capacitor body 110, respectively. Here, the thickness direction (T-axis direction) may be a direction perpendicular to wide surfaces (main surfaces) of sheet-shaped constituent elements, and may be used, for example, as the same concept as the stacking direction in which dielectric layers 111 are stacked. The length direction (L-axis direction) may be a direction extending in parallel with the wide surfaces (main surfaces) of the sheet-shaped constituent elements and be a direction appropriately perpendicular to the thickness direction (T-axis direction), and may be, for example, a direction in which a first external electrode 131 and a second external electrode 132 are positioned on both sides. The width direction (W-axis direction) may be a direction extending in parallel with the wide surfaces (main surfaces) of the sheet-shaped constituent elements and be a direction appropriately perpendicular to the thickness direction (T-axis direction) and the length direction (L-axis direction), and the lengths of the sheet-shaped constituent elements in the length direction (L-axis direction) may be longer than their lengths in the width direction (W-axis direction).

Referring to FIG. 1 to FIG. 3, the multilayered capacitor 100 according to the embodiment may include the capacitor body 110, and the first external electrode 131 and the second external electrode 132 that are disposed on both ends of the capacitor body 110 facing each other in the length direction (L-axis direction).

The capacitor body 110 may have, for example, an approximate hexahedral shape.

In the present embodiment, for ease of explanation, in the capacitor body 110, two surfaces facing each other in the thickness direction (T-axis direction) are defined as a first surface and a second surface, and two surfaces that are coupled to the first surface and the second surface and face each other in the length direction (L-axis direction) are defined as a third surface and a fourth surface, and two surfaces that are coupled to the first surface and the second surface, are coupled to the third surface and the fourth surface, and face each other in the width direction (W-axis direction) are defined as a fifth surface and a sixth surface.

As an example, the first surface which is the lower surface may be a surface oriented to the mounting direction. Further, the first surface to the sixth surface may be flat; however, the present embodiment is not limited thereto, and for example, the first surface to the sixth surface may be curved surfaces with convex center portions, and the border of each surface, i.e., the edge may be rounded.

The shape and dimensions of the capacitor body 110 and the number of dielectric layers 111 that are stacked are not limited to those shown in the drawings of the present embodiment.

The capacitor body 110 is formed by stacking a plurality of dielectric layers 111 in the thickness direction (T-axis direction) and baking them, and includes the plurality of dielectric layers 111, and first internal electrodes 121 and second internal electrodes 122 that are alternately disposed in the thickness direction (T-axis direction) with the dielectric layers 111 interposed therebetween.

In this case, adjacent dielectric layers 111 in the capacitor body 110 may be so integrated that it is difficult to see the boundaries between the dielectric layers without the use of a scanning electron microscope (SEM).

Further, the capacitor body 110 may include an active region and cover regions 112 and 113.

The active region is a portion that contributes to the formation of the capacity of the multilayered capacitor 100. As an example, the active region may be the region where the first internal electrodes 121 and the second internal electrodes 122 that are stacked along the thickness direction (T-axis direction) overlap.

The cover regions 112 and 113 are margin portions in the thickness direction, and may be positioned on the first surface side and second surface side of the active region in the thickness direction (T-axis direction). These cover regions 112 and 113 may be stacked on the upper surface and lower surface of the active region, respectively, and each may consist of a single dielectric layer 111 or two or more dielectric layers 111.

Also, the capacitor body 110 may further include side cover regions. The side cover regions are margin portions in the width direction, and may be positioned on the fifth surface side and sixth surface side of the active region in the width direction (W-axis direction), respectively. These side cover regions may be formed by stacking dielectric green sheets with conductive paste layers for forming internal electrodes and baking them. When the conductive paste layers are formed on the surfaces of the dielectric green sheets, the conductive paste may be applied only to some portions of the surfaces of the dielectric green sheets and may not be applied to both side surfaces of the surfaces of the dielectric green sheets.

The cover regions 112 and 113 and the side cover regions serve to prevent damage to the first internal electrodes 121 and the second internal electrodes 122 by physical or chemical stress.

The multilayered capacitor 100 according to the embodiment includes the capacitor body 110 including the dielectric layers 111 and the internal electrodes 121 and 122, and the external electrodes 131 and 132 that are disposed on the outside of the capacitor body 110, and the internal electrodes 121 and 122 contains a Ni-Ge alloy.

Germanium (Ge) is an element whose oxidation tendency is very similar to that of tin (Sn). When the internal electrodes are formed, if Ge is added and is baked together with Ni in a reducing atmosphere, a Ni-Ge alloy is formed uniformly throughout the internal electrodes.

The Ni-Ge alloy can reduce the grain boundary energy and surface tension of Ni, thereby improving the smoothness and connectivity of the internal electrodes. If the smoothness of the internal electrodes 121 and 122 is improved, even if the thicknesses of the dielectric layers 111 are reduced, the intensity of the electric field that is applied per dielectric layer can be dispersed.

Further, by alloying Ge, which is a metalloid, with Ni, the insulation of the interfaces between the dielectric layers 111 and the internal electrodes 121 and 122 can be improved, whereby the reliability can be improved. Furthermore, since the sintering rate of Ni is delayed during the process of alloying Ni with Ge, the electrode connectivity is further improved. Therefore, it is possible to implement a capacitor with higher capacity.

The internal electrodes 121 and 122 that contain the Ni-Ge alloy may be formed by adding Ge or $GeO_2$ nanoparticles to the conductive paste for forming the internal electrodes, controlling the partial pressure of oxygen to $10^{-9}$ to $10^{-10}$, and performing baking for 10 minutes to 20 minutes.

The internal electrodes 121 and 122 may further contain a conductive metal in addition to the above-mentioned Ni-Ge alloy. The conductive metal may contain Ni, Cu, Ag, Pd, Au, an alloy thereof, or a combination thereof.

In an embodiment, the average content of Ge relative to Ni in the entire internal electrodes 121 and 122 may be in a range from 0.1 wt% to 10 wt%, for example, a range from 0.5 wt% to 10 wt%, a range from 0.5 wt% to 8 wt%, or a range from 1 wt% to 8 wt%.

When the average wt% of Ge relative to Ni in the entire internal electrodes 121 and 122 is less than 0.1 wt%, it may be difficult to improve the reliability of the capacitor and implement high capacity.

When the average wt% of Ge relative to Ni in the entire internal electrodes 121 and 122 exceeds 10 wt%, the melting point of the Ni-Ge alloy may become too low, and thus the smoothness and connectivity of the internal electrodes may be deteriorated.

According to the multilayered capacitor 100 of the embodiment, when the average content (wt%) of Ge relative to Ni at the center portion of the internal electrodes 121 and 122 is denoted by X and the average content (wt%) of Ge relative to Ni at points spaced 20 nm apart from the interfaces between the internal electrodes 121 and 122 and the dielectric layers 111 toward the center portion of the internal electrodes is denoted by Y, the relationship between X and Y satisfies the following Expression 1.

[Expression 1]

$$\frac{|X-Y|}{X} \leq 0.2$$

When $\frac{|X-Y|}{X}$ in the above Expression 1 exceeds 0.2, the alloy of Ge and Ni may not be uniformly formed in the internal electrodes, and thus it may be difficult to improve the smoothness and connectivity of the internal electrodes.

The center portion of the internal electrodes 121 and 122 may refer to the middle point between one point of one surface of an internal electrode and one point of the other surface of the internal electrode positioned at the shortest distance from the above-mentioned point in a cross section taken by cutting the center of the capacitor body 110 in the W-axis direction along the L-axis direction and the T-axis direction. Further, the center portion of the internal electrodes may refer to not only the middle point but also a region within ±30% in the T-axis direction from the middle point.

When the average content (wt%) of Ge relative to Ni at the center portion of the internal electrodes 121 and 122 is denoted by X, the value of X may be in a range from 0.90 wt% to 1.80 wt%, for example, a range from 0.95 wt% to 1.80 wt%, a range from 0.95 wt% to 1.60 wt%, or a range from 0.95 wt% to 1.55 wt%.

The surface layer portion of the internal electrodes 121 and 122 may be a region other than the center portion of the internal electrodes, and may refer to a point 20 nm away in the T-axis direction from the interfaces between the internal electrodes 121 and 122 and the dielectric layers 111 toward the center portion of the internal electrodes. Further, the surface layer portion may refer to not only the above-mentioned point but also a region within ±30% in the T-axis direction from the above-mentioned point.

When the average content (wt%) of Ge relative to Ni in the surface layer portion of the internal electrodes 121 and 122 is denoted by Y, the value of Y may be in a range from 1.00 wt% to 1.50 wt%, for example, a range from 1.10 wt% to 1.50 wt% or a range from 1.10 wt% to 1.30 wt%.

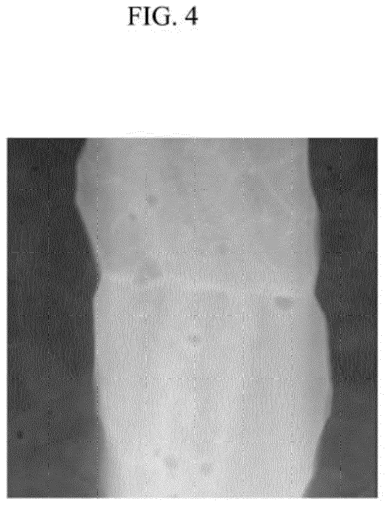

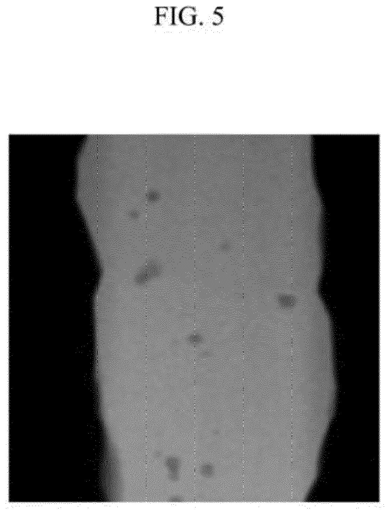

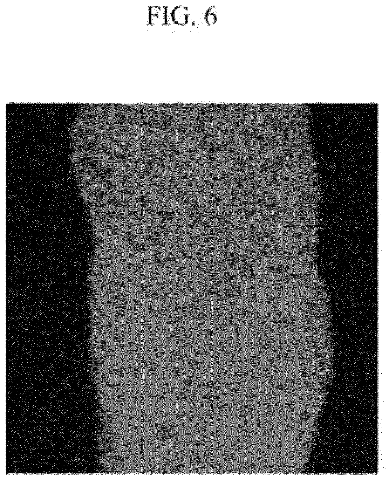

FIG. 4 is a TEM image showing the result of component analysis on the internal electrodes 121 and 122 which are included in the multilayered capacitor 100 according to an embodiment. FIG. 5 shows EDS mapping of Ni. In FIG. 5, the light grey areas indicate the presence of Ni. FIG. 6 shows EDS mapping of Ge. In FIG. 6, the light grey areas indicate the presence of Ge.

Referring to FIG. 4 to FIG. 6, as described above, the average wt% of Ge relative to Ni in the internal electrodes 121 and 122 may be measured by transmission electron microscope (TEM)-energy disperse X-ray spectrometer (EDS) quantitative analysis. Other methods and/or tools appreciated by one of ordinary skill in the art, even if not described in the present disclosure, may also be used.

As an example, the average wt% of Ge relative to Ni in the entire internal electrodes 121 and 122 may be obtained by selecting five or more arbitrary internal electrodes, selecting 10 arbitrary points in the internal electrodes, quantitatively analyzing Ni and Ge by TEM-EDS, and calculating the arithmetic average value of measured values.

As an example, X, the average wt% of Ge relative to Ni at the center portion of the internal electrodes 121 and 122, may be obtained by selecting five or more arbitrary internal electrodes, selecting five points at equal intervals corresponding to the center portion of the internal electrodes, quantitatively analyzing Ni and Ge by TEM-EDS, and calculating the arithmetic average value of measured values.

As an example, Y, the average wt% of Ge relative to Ni in the surface layer portion of the internal electrodes 121 and 122, may be obtained by selecting five or more arbitrary internal electrodes, selecting five points at equal intervals corresponding to the point about 20 nm away from the interfaces between the internal electrodes and the dielectric layers toward the center of the internal electrodes, quantitatively analyzing Ni and Ge by TEM-EDS, and calculating the arithmetic average value of measured values.

The first internal electrodes 121 and the second internal electrodes 122 are electrodes with different polarities, and may be alternately disposed along the T-axis direction such that a first internal electrode and a second internal electrode adjacent to each other with a dielectric layer 111 interposed therebetween face each other, and one end of each internal electrode may be exposed from the third and fourth surfaces of the capacitor body 110.

The first internal electrodes 121 and the second internal electrodes 122 may be electrically insulated from each other by the dielectric layers 111 disposed therebetween.

The end portions of the first internal electrodes 121 and the second internal electrodes 122 that are alternately exposed from the third and fourth surfaces of the capacitor body 110 may be electrically coupled to the first external electrode 131 and the second external electrode 132, respectively.

Further, the first internal electrodes 121 and the second internal electrodes 122 may contain dielectric particles of the same composition as that of a ceramic material that is contained in the dielectric layers 111.

The first internal electrodes 121 and the second internal electrodes 122 may be formed using conductive paste containing a conductive metal. The printing method of the conductive paste may use a screen printing method, a gravure printing method, or the like.

As an example, the average thicknesses of the first internal electrodes 121 and the second internal electrodes 122 may be equal to or larger than 0.05 $\mu$m, 0.1 $\mu$m, 0.2 $\mu$m, or 0.25 $\mu$m, and may be equal to or smaller than 1 $\mu$m, 0.5 $\mu$m, 0.4 $\mu$m, or 0.3 $\mu$m.

The average thickness of the first internal electrodes 121 or the second internal electrodes 122 may be measured by the following method.

First, a cross section sample is prepared by putting the multilayered capacitor 100 in an epoxy mixture, curing it, polishing an L-axis direction-T-axis direction side surface of the capacitor body 110 half way in the W-axis direction, fixing and keeping it in a vacuum atmosphere chamber, and cutting the center of the capacitor body 110 in the W-axis direction along the L-axis direction and the T-axis direction.

Next, a scanning electron microscope (SEM) image obtained by observing the cross section sample with a SEM is prepared.

In the SEM image of the cross section sample, the center point of a first internal electrode 121 or a second internal electrode layer 122 in the length direction (L-axis direction) or the width direction (W-axis direction) is set as a reference point, and the arithmetic average value of the thicknesses of the first internal electrode 121 or the second internal electrode layer 122 at 10 points at predetermined intervals from the reference point is obtained. In this way, the average thicknesses of the internal electrodes may be obtained. Other methods and/or tools appreciated by one of ordinary skill in the art, even if not described in the present disclosure, may also be used.

The interval of the 10 points may be adjusted according to the scale of the SEM image, and may be, for example, an interval of 1 $\mu$m to 100 $\mu$m, 1 $\mu$m to 50 $\mu$m, or 1 $\mu$m to 10 $\mu$m.

In this case, all 10 points should be located within the first internal electrode 121 or the second internal electrode layer 122, and when all 10 points are not located within the first internal electrode 121 or the second internal electrode layer 122, the position of the reference point may be changed or the interval of 10 points may be adjusted.

The dielectric layers 111 contains a dielectric, and the dielectric may contain a major component and a minor component.

The major component is the parent material of the dielectric, has a high dielectric constant, and contributes to the formation of the dielectric constant of the multilayered capacitor 100.

As an example, the major component may be a dielectric material containing $Ba_mTiO_3$ (wherein $0.995 \le m \le 1.10$), $(Ba_{1-x}Ca_x)_m(Ti_{1-y}Zr_y)O_3$ (wherein $0.995 \le m \le 1.10$, $0 \le x \le 0.10$, and $0 < y \le 0.20$), $Ba_m(Ti_{1-x}Zr_x)O_3$ (wherein $0.995 \le m \le 1.10$ and $x \le 0.10$), $(Ba_{1-x}Ca_x)_m(Ti_{1-y}Sn_y)O_3$ (wherein $0.995 \le m \le 1.10$, $0 \le x \le 0.10$ and $0 < y \le 0.20$), or a combination thereof.

As an example, the major component may contain $BaTiO_3$, $Ba(Ti, Zr)O_3$, $Ba(Ti, Sn)O_3$, $(Ba, Ca)TiO_3$, $(Ba, Ca)(Ti, Zr)O_3$, $(Ba, Ca)(Ti, Sn)O_3$, $(Ba, Sr)TiO_3$, $(Ba, Sr)(Ti, Zr)O_3$, $(Ba, Sr)(Ti, Sn)O_3$, or a combination thereof.

As an example, the minor component may contain dysprosium (Dy), vanadium (V), manganese (Mn), chromium (Cr), silicon (Si), aluminum (Al), magnesium (Mg), tin (Sn), antimony (Sb), germanium (Ge), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

The dielectric may further contain a ceramic additive, an organic solvent, a binder, a dispersant, or a combination thereof.

As an example, the average thickness of the dielectric layers 111 may be equal to or larger than 0.05 $\mu$m, 0.1 $\mu$m, or 0.2 $\mu$m, and may be equal to or smaller than 2.5 $\mu$m, 1.5 $\mu$m, 0.5 $\mu$m, or 0.4 $\mu$m. When the average thickness of the dielectric layers 111 is smaller than 0.05 $\mu$m, verifying improvement in reliability may be difficult.

The average thickness of the dielectric layers 111 may be the arithmetic average obtained by setting, as a reference point, the length-wise (L-axis direction) or width-wise (W-axis direction) center point of a dielectric layer 111 in the SEM image of the cross section sample and averaging the thicknesses of the dielectric layer 111 at 10 points apart at a predetermined interval from the reference point. Other methods and/or tools appreciated by one of ordinary skill in the art, even if not described in the present disclosure, may also be used.

The interval of the 10 points may be adjusted according to the scale of the SEM image, and may be, for example, an interval of 1 $\mu$m to 100 $\mu$m, 1 $\mu$m to 50 $\mu$m, or 1 $\mu$m to 10 $\mu$m.

In this case, all 10 points should be located within the dielectric layer 111, and when all 10 points are not located within the dielectric layer 111, the position of the reference point may be changed or the interval of 10 points may be adjusted.

The first external electrode 131 and the second external electrode 132 may receive voltages of different polarities, and may be electrically coupled to the exposed portions of the first internal electrodes 121 and the second internal electrodes 122, respectively.

According to the above configuration, when a predetermined voltage is applied between the first external electrode 131 and the second external electrode 132, charge is accumulated between the first internal electrodes 121 and the second internal electrodes 122 facing each other. At this time, the capacitance of the multilayered capacitor 100 becomes proportional to the overlapped area of the first internal electrodes 121 and the second internal electrodes 122 overlapping each other along the T-axis direction in the active region.

The first external electrode 131 and the second external electrode 132 may be disposed on the third and fourth surfaces of the capacitor body 110, respectively, and may include first and second connection portions, respectively, that are coupled to the first internal electrodes 121 and the second internal electrodes 122, respectively, and include first and second band portions, respectively, that are disposed at the edges where the third and fourth surfaces of the capacitor body 110 meet either the first and second surfaces or the fifth and sixth surfaces.

The first and second band portions may extend from the first and second connection portions to some points of either the first and second surfaces or fifth and sixth surfaces of the capacitor body 110. The first and second band portions may serve to improve the adhesion strength of the first external electrode 131 and the second external electrode 132.

As an example, each of the first external electrode 131 and the second external electrode 132 may include a sintered metal layer that is in contact with the capacitor body 110, a conductive resin layer that is disposed to cover the sintered metal layer, and a plating layer that is disposed to cover the conductive resin layer.

The sintered metal layer may contain a conductive metal and glass.

As an example, the sintered metal layer may contain, as the conductive metal, copper (Cu), nickel (Ni), silver (Ag), palladium (Pd), gold (Au), platinum (Pt), tin (Sn), tungsten (W), titanium (Ti), lead (Pb), an alloy thereof, or a combination thereof, and for example, copper (Cu) may contain a copper (Cu) alloy. When the conductive metal contains copper, metals other than copper may be contained in the amount of 5% by mole or less relative to 100% by mole of copper.

As an example, the sintered metal layer may contain a composition containing oxides as glass, and may contain, for example, one or more selected from a group consisting of silicon oxides, boron oxides, aluminum oxides, transition metal oxides, alkali metal oxides, and alkaline earth metal oxides. One or more transition metals may be selected from a group consisting of zinc (Zn), titanium (Ti), copper (Cu), vanadium (V), manganese (Mn), iron (Fe), and nickel (Ni), and one or more alkali metals may be selected from a group consisting of lithium (Li), sodium (Na), and potassium (K), and one or more alkaline earth metals may be selected from a group consisting of magnesium (Mg), calcium (Ca), strontium (Sr), and barium (Ba).

Selectively, the conductive resin layer may be formed on the sintered metal layer, and may be formed, for example, so as to completely cover the sintered metal layer. Meanwhile, the first external electrode 131 and the second external electrode 132 may not include the sintered metal layers, and in this case, the conductive resin layers may be in direct contact with the capacitor body 110.

The conductive resin layers may extend to the first and second surfaces or fifth and sixth surfaces of the capacitor body 110, and the lengths of regions (i.e., band portions) where the conductive resin layers extend to the first and second surfaces or fifth and sixth surfaces of the capacitor body 110 may be longer than the lengths of regions (i.e., band portions) where the sintered metal layers extend in the first and second surfaces or fifth and sixth surfaces of the capacitor body 110. In other words, the conductive resin layers may be formed on the sintered metal layers, and may be formed so as to completely cover the sintered metal layers.

The conductive resin layers contain a resin and a conductive metal.

The resin which is contained in the conductive resin layers is not particularly limited as long as it has a bonding property and an impact absorption property and can be mixed with conductive metal powder to form a paste, and may contain, for example, a phenolic resin, an acrylic resin, a silicon resin, an epoxy resin, or a polyimide resin.

The conductive metal that is contained in the conductive resin layers serves to electrically couple the conductive resin layers to the first internal electrodes 121 and the second internal electrodes 122, or the sintered metal layers.

The conductive metal that is contained in the conductive resin layers may have a spherical shape, a flake shape, or a combination thereof. In other words, the conductive metal may be formed only in a flake shape, or may be formed only in a spherical shape, or may be the form of a mixture of a flake shape and a spherical shape.

Here, the spherical shape may include a shape which is not fully spherical, and may include, for example, a shape in which the ratio of the length of the long axis to the length of the short axis ([Long Axis]/[Short Axis]) is 1.45 or less. Flake-type powder may refer to powder having a flat, elongated shape, but is not particularly limited, and may be, for example, a shape in which the ratio of the length of the long axis to the length of the short axis ([Long Axis]/[Short Axis]) is 1.95 or greater.

The first external electrode 131 and the second external electrode 132 may further include plating layers that are disposed on the outer sides of the conductive resin layers.

The plating layers may contain one of nickel (Ni), copper (Cu), tin (Sn), palladium (Pd), platinum (Pt), gold (Au), silver (Ag), tungsten (W), titanium (Ti), lead (Pb), etc., or an alloy thereof. As an example, each plating layer may be a nickel (Ni) plating layer or a tin (Sn) plating layer, or may be a form in which a nickel (Ni) plating layer and a tin (Sn) plating layer are sequentially stacked, or may be a form in which a tin (Sn) plating layer, a nickel (Ni) plating layer, and a tin (Sn) plating layer are sequentially stacked. Alternatively, each plating layer may include a plurality of nickel (Ni) plating layers and/or a plurality of tin (Sn) plating layers.

The plating layers can improve the mounting characteristics of the multilayered capacitor 100 to a substrate, and the structural reliability, the resistance to the outside, the heat resistance, and equivalent series resistance (ESR) of the multilayered capacitor.

Hereinafter, specific Examples of the disclosure will be presented. However, the following Examples are intended only to specifically illustrate or describe the disclosure, and should not be construed as limiting the scope of the disclosure.

Examples

Multilayered capacitors were manufactured while the contents of Ni and Ge in pastes for internal electrodes were adjusted and the oxygen partial pressure condition was adjusted. During the manufacturing of the multilayered capacitors, baking was performed for about 10 minutes while the partial pressure of oxygen was controlled to about $10^{-9}$ to $10^{-10}$. In the manufactured multilayered capacitors, the average thickness of internal electrodes was 0.25 $\mu$m, and the average thickness of dielectric layers was 1.0 $\mu$m.

Specifically, multilayered capacitors of Examples 1 to 7 and Comparative Examples 1 to 3 in which the average contents (wt%) of Ge relative to Ni in the entire internal electrodes are as shown in the following Table 2 were manufactured.

Also, multilayered capacitors of Examples 4-1 to 4-4 and Comparative Examples 4-1 and 4-2 in which the average contents (wt%) of Ge relative to Ni in the entire internal electrodes are 3.5 wt% and the values of $\frac{|X-Y|}{X}$ are as shown in the following Table 3 were manufactured.

For reference, the following Table 1 shows the average contents of Ge relative to Ni measured from the center portions and surface layer portions of the five arbitrary internal electrodes, the average content (X) of Ge relative to Ni at the center portions of internal electrodes and the average content (Y) of Ge relative to Ni in the surface layer portions of the internal electrodes.

(Table 1)

| | Average content of Ge relative to Ni (wt%) | | | | | |
|---|---|---|---|---|---|---|
| | 1 | 2 | 3 | 4 | 5 | Average |
| Y | 1.22 | 1.10 | 1.12 | 1.18 | 1.30 | 1.184 |
| X | 1.51 | 0.98 | 1.08 | 1.11 | 1.08 | 1.152 |

Evaluation Examples

Evaluation Example 1: MTTF (Mean Time To Failure) Measurement

MTTF (Mean Time to Failure) values were measured from 400 samples of each of the Examples and the Comparative Examples by performing a high-temperature load test under conditions of 125°C and 8 V.

At this time, the time at which the insulation resistance became 10 kΩ or less was set as a fixed time, and in Table 2 and Table 3, using the MTTF value of Comparative Example 1 as a reference value of 1, the relative values of the other Examples and Comparative Examples were calculated.

Evaluation Example 2: capacitance

The capacitance was measured under conditions of 1 kHz and AC 0.5 V with an LCR meter, and in Table 2, using the capacitance of Comparative Example 1 as a reference value of 1, the relative values of the other Examples and Comparative Examples were calculated.

(Table 2)

| | Average content of Ge relative to Ni in entire internal electrodes (wt%) | Capacitance | MTTF |
|---|---|---|---|
| Comparative Example 1 | 0 | 1 | 1 |
| Example 1 | 0.1 | 1.02 | 1.05 |
| Example 2 | 0.5 | 1.18 | 1.26 |
| Example 3 | 1.8 | 1.32 | 1.44 |
| Example 4 | 3.5 | 1.24 | 1.62 |
| Example 5 | 5.1 | 1.26 | 1.53 |
| Example 6 | 7.3 | 1.15 | 1.29 |
| Example 7 | 10.0 | 1.12 | 1.03 |
| Comparative Example 2 | 10.8 | 0.96 | 0.92 |
| Comparative Example 3 | 12.4 | 0.78 | 0.85 |

Referring to Table 2, Comparative Example 1 did not contain a Ni-Ge alloy containing Ge in the internal electrodes, and Comparative Example 2 and Comparative Example 3 correspond to the case where excessive amounts of Ge were contained in the internal electrodes.

Referring to Table 2, as compared to Comparative Examples 1 and 3, it can be seen that the multilayered capacitors of Examples 1 to 7 have higher capacitance, and have higher MTTF values and thus are more reliable.

(Table 3)

| | Average content of Ge relative to Ni in entire internal electrodes (wt%) | $\frac{\lvert X-Y\rvert}{X}$ | MTTF |
|---|---|---|---|
| Comparative Example 1 | 0 | - | 1 |
| Example 4-1 | 3.5 | 0.04 | 1.42 |
| Example 4-2 | | 0.09 | 1.62 |
| Example 4-3 | | 0.16 | 1.51 |
| Example 4-4 | | 0.20 | 1.26 |
| Comparative Example 4-1 | | 0.24 | 0.98 |
| Comparative Example 4-2 | | 0.31 | 0.91 |

Referring to Table 3, it can be seen that Comparative Examples 4-1 and 4-2 in which the values of $\frac{\lvert X-Y\rvert}{X}$ exceed 0.20 have significantly lower MTTF values as compared to Examples 4-1 to 4-4, and therefore their reliability is not good.

While this disclosure has been described in connection with what is presently considered to be practical Examples, it is to be understood that the disclosure is not limited to the disclosed Examples. On the contrary, it is intended to cover various modifications and equivalent arrangements included within the spirit and scope of the appended claims.

**Claims**

1. A multilayered capacitor comprising:

   a capacitor body that includes a dielectric layer and an internal electrode; and
   an external electrode that is disposed on an outside of the capacitor body,
   wherein the internal electrode includes a Ni-Ge alloy, and
   when an average content (wt%) of Ge relative to Ni at a center portion of the internal electrode is denoted by X and the average content (wt%) of Ge relative to Ni at points spaced 20 nm apart from an interface between the internal electrode and the dielectric layer toward the center portion of the internal electrode is denoted by Y, a relationship between X and Y satisfies Expression 1:

   [Expression 1]

   $$\frac{\lvert X-Y\rvert}{X} \le 0.2$$
   .

2. The multilayered capacitor of claim 1, wherein
   the average content (wt%) of Ge relative to Ni in the internal electrode is in a range of from 0.1 wt% to 10 wt%.

3. The multilayered capacitor of one of claims 1 to 2, wherein

   a value of X is in a range of from 0.90 wt% to 1.80 wt%; and/or
   wherein
   a value of Y is in a range of from 1.00 wt% to 1.50 wt%.

4. The multilayered capacitor of one of claims 1 to 3, wherein

   an average thickness of the internal electrode is in a range of from 0.05 $\mu$m to 1 $\mu$m; or wherein
   an average thickness of the dielectric layer is in a range from 0.05 $\mu$m to 2.5 $\mu$m.

5. The multilayered capacitor of one of claims 1 to 4, wherein
the dielectric layer includes a dielectric including a major component and a minor component.

6. The multilayered capacitor of claim 5, wherein the major component includes:

BamTiO3, where $0.995 \leq m \leq 1.10$,
(Ba1-XCax)m(Ti1-yZry)O3, where $0.995 \leq m \leq 1.10$, $0 \leq x \leq 0.10$, and $0 < y \leq 0.20$, Bam(Ti1-xZrx)O3, where $0.995 \leq m \leq 1.10$ and $x \leq 0.10$,
(Ba1-XCax)m(Ti1-ySny)O3, where $0.995 \leq m \leq 1.10$, $0 \leq x \leq 0.10$ and $0 < y \leq 0.20$,
or a combination thereof.

7. The multilayered capacitor of claim 5, wherein
the minor component includes dysprosium (Dy), vanadium (V), manganese (Mn), chromium (Cr), silicon (Si), aluminum (Al), magnesium (Mg), tin (Sn), antimony (Sb), germanium (Ge), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

8. The multilayered capacitor of claim 2, wherein

an average thickness of the internal electrode is in a range of from 0.05 $\mu$m to 1 $\mu$m; and/or wherein
an average thickness of the dielectric layer is in a range from 0.05 $\mu$m to 2.5 $\mu$m.

9. A multilayered capacitor comprising:

a capacitor body that includes a dielectric layer and an internal electrode; and
an external electrode that is disposed on an outside of the capacitor body,
wherein the internal electrode includes a Ni-Ge alloy, and
an average content (wt%) of Ge relative to Ni in the internal electrode is not more than 10 wt%, and
when the average content (wt%) of Ge relative to Ni at a center portion of the internal electrode is denoted by X and the average content (wt%) of Ge relative to Ni at points spaced 20 nm apart from an interface between the internal electrode and the dielectric layer toward the center portion of the internal electrode is denoted by Y, a relationship between X and Y satisfies Expression 1:

[Expression 1]

$$\frac{|X-Y|}{X} \leq 0.2$$

.

10. The multilayered capacitor of claim 9, wherein

a value of X is in a range of from 0.90 wt% to 1.80 wt%; and/or
wherein
a value of Y is in a range of from 1.00 wt% to 1.50 wt%.

11. The multilayered capacitor of claim 9 or 10, wherein

an average thickness of the internal electrode is in a range of from 0.05 $\mu$m to 1 $\mu$m; or wherein
an average thickness of the dielectric layer is in a range of from 0.05 $\mu$m to 2.5 $\mu$m.

12. The multilayered capacitor of one of claims 9 to 11, wherein
the dielectric layer includes a dielectric including a major component and a minor component.

13. The multilayered capacitor of claim 12, wherein the major component includes:

BamTiO3, where $0.995 \leq m \leq 1.10$,

$(Ba_{1-X}Ca_x)_m(Ti_{1-y}Zr_y)O_3$, where $0.995 \leq m \leq 1.10$, $0 \leq x \leq 0.10$, and $0 < y \leq 0.20$, $Ba_m(Ti_{1-x}Zr_x)O_3$, where $0.995 \leq m \leq 1.10$ and $x \leq 0.10$,
$(Ba_{1-X}Ca_x)_m(Ti_{1-y}Sn_y)O_3$, where $0.995 \leq m \leq 1.10$, $0 \leq x \leq 0.10$ and $0 < y \leq 0.20$,
or a combination thereof.

14. The multilayered capacitor of claim 12, wherein
the minor component includes dysprosium (Dy), vanadium (V), manganese (Mn), chromium (Cr), silicon (Si), aluminum (Al), magnesium (Mg), tin (Sn), antimony (Sb), germanium (Ge), gallium (Ga), indium (In), barium (Ba), lanthanum (La), yttrium (Y), actinium (Ac), cerium (Ce), praseodymium (Pr), neodymium (Nd), promethium (Pm), samarium (Sm), europium (Eu), gadolinium (Gd), terbium (Tb), holmium (Ho), erbium (Er), thulium (Tm), ytterbium (Yb), lutetium (Lu), hafnium (Hf), or a combination thereof.

15. The multilayered capacitor of one of claims 9 to 14, wherein

an average thickness of the internal electrode is in a range of from 0.05 μm to 1 μm, and
an average thickness of the dielectric layer is in a range from 0.05 μm to 2.5 μm.

FIG. 1

FIG. 2

FIG. 4

FIG. 5

FIG. 6